# EUROPEAN PATENT APPLICATION

(11) **EP 4 806 715 A1**
(43) Date of publication of application: **16.09.2026**
(21) Application number: 26160632.1
(22) Date of filing: 25.02.2026
(51) Int. Cl.: B60L 15/20, B60W 30/18

(54) **COMFORT START CONTROL METHOD FOR VEHICLE IN PARK, CONTROLLER, AND VEHICLE**

(30) Priority: 25.02.2025 CN 202510219203
(71) Applicant: HUAWEI TECHNOLOGIES CO., LTD., Shenzhen 518129 (CN)
(72) Inventor: NING, Yu, Shenzhen, 518129 (CN); HUANG, Chongxi, Shenzhen, 518129 (CN); NI, Hui, Shenzhen, 518129 (CN); LIU, Ying, Shenzhen, 518129 (CN)
(74) Representative: Gill Jennings & Every LLP

(57) **Abstract**

This application provides a comfort start control method for a vehicle in park, a controller, and a vehicle, which are applied to the field of electric vehicle technologies. In the control method, when an accelerator pedal position of the vehicle is greater than or equal to a first preset accelerator pedal position at a first moment, a wheel-end braking apparatus is controlled to reduce output braking torque. Then, when the braking torque output by the wheel-end braking apparatus is less than or equal to a first preset braking torque value at a second moment after the first moment, a drive motor is controlled to output driving torque. Based on this, after a driver slightly steps on an accelerator pedal, the vehicle can automatically perform collaborative control on the braking torque output by the wheel-end braking apparatus and the driving torque output by the drive motor, to start the electric vehicle in a timely and stable manner. This alleviates impact and a sense of jerk in a parking start process, improves comfort in the parking start process, and enhances driving experience of a user.

## Description

### TECHNICAL FIELD

This application relates to the field of electric vehicle technologies, and in particular, to a comfort start control method for a vehicle in park, a controller, and a vehicle.

### BACKGROUND

With development of electric vehicles, users have an increasingly high requirement for comfort during traveling of the electric vehicles. In scenarios such as stopping to yield to a pedestrian, stopping at an intersection for traffic lights, and stopping due to traffic congestion, the electric vehicle during traveling needs to make a short stop and then restart. After the short stop, a parking function of the electric vehicle is triggered before the electric vehicle is restarted. However, currently, the electric vehicle usually has only a parking assist function. A comfort degree in a process in which a driver operates an accelerator pedal to start the electric vehicle depends completely on the driver's experience and skill, and a jerk or the like may occur during parking start of the electric vehicle. Consequently, the parking start process of the electric vehicle greatly affects driving and riding experience. Therefore, there is an urgent need to provide a solution to improve comfort of the parking start process of the electric vehicle, thereby enhancing user experience.

### SUMMARY

Embodiments of this application provide a comfort start control method for a vehicle in park, a controller, and a vehicle, to alleviate a jerk and delay in a parking start process of an electric vehicle, thereby improving comfort in the parking start process of the electric vehicle, and enhancing user experience.

To achieve the foregoing objectives, embodiments of this application provide the following technical solutions.

According to a first aspect, an embodiment of this application provides a comfort start control method for a vehicle in park. The control method is used to control, in a parking start process of the vehicle, braking torque output by a wheel-end braking apparatus of the vehicle and driving torque output by a drive motor of the vehicle. The control method includes: When an accelerator pedal position of the vehicle is greater than or equal to a first preset accelerator pedal position at a first moment, the wheel-end braking apparatus is controlled to reduce the output braking torque; and when the braking torque output by the wheel-end braking apparatus is less than or equal to a first preset braking torque value at a second moment after the first moment, the drive motor is controlled to output the driving torque.

In the parking start process of the vehicle, the accelerator pedal position is greater than or equal to the first preset accelerator pedal position, indicating that a driver needs to start the vehicle. In this case, the vehicle actively controls the wheel-end braking apparatus to reduce the output braking torque, so that the vehicle can gradually exit a parking braking state. Then, when the braking torque output by the wheel-end braking apparatus is reduced to be less than or equal to the first preset braking torque value, the vehicle actively controls the drive motor to output the driving torque, to drive a wheel of the vehicle to rotate, so as to start the vehicle. Based on this, the driver only needs to trigger a parking start function of the vehicle by stepping on an accelerator pedal during parking start, and does not need to operate the accelerator pedal during parking start of the vehicle to control the vehicle to complete parking start. This reduces operation difficulty of parking start, and avoids a startup delay caused by an improper operation of the driver. In addition, according to the foregoing controll method, a sense of jerk generated during switching between the braking torque output by the wheel-end braking apparatus and the driving torque output by the drive motor can be alleviated, so that the vehicle is started more comfortably, thereby enhancing user experience.

In an implementation, the control method further includes: When a vehicle speed of the vehicle reaches a first preset vehicle speed at a third moment after the second moment, the drive motor is controlled to output first driving torque, where the first driving torque is torque required for maintaining the vehicle speed of the vehicle at the first preset vehicle speed; and when the accelerator pedal position is greater than or equal to a second preset accelerator pedal position at a fourth moment after the third moment, the driving torque output by the drive motor is controlled to respond to the accelerator pedal position.

In the foregoing implementation solution, when the vehicle speed reaches the first preset vehicle speed after the vehicle is started, it indicates that the vehicle can travel normally. In this case, the vehicle actively controls the drive motor to output the first driving torque, to control the vehicle to perform cruise control at the first preset vehicle speed, improving driving comfort. During cruise control of the vehicle, the accelerator pedal position is greater than the second preset accelerator pedal position, indicating that the driver needs to accelerate. In this case, the vehicle actively controls the driving torque output by the drive motor to respond to the accelerator pedal position, so that the vehicle can accelerate.

In an implementation, the control method further includes: When a brake pedal position increase rate of the vehicle is greater than a first preset brake pedal position increase rate at any moment between the third moment and the fourth moment, the driving torque output by the drive motor is controlled to be zero, and the wheel-end braking apparatus is controlled to respond to a brake pedal position of the vehicle.

In the foregoing implementation solution, when the brake pedal position increase rate is greater than the first preset brake pedal position increase rate during cruise control of the vehicle at the first preset vehicle speed, it indicates that the driver is quickly and heavily stepping on a brake pedal. In this case, the vehicle actively controls the driving torque output by the drive motor to be zero and controls the wheel-end braking apparatus to brake the vehicle in time in response to the brake pedal position of the vehicle, thereby ensuring driving safety.

In an implementation, the control method further includes: When a brake pedal position increase rate of the vehicle is less than or equal to a first preset brake pedal position increase rate at any moment between the third moment and the fourth moment, the vehicle speed of the vehicle is controlled to be inversely proportional to a brake pedal position.

In the foregoing implementation solution, when the brake pedal position increase rate is less than or equal to the first preset brake pedal position increase rate during cruise control of the vehicle at the first preset vehicle speed, it indicates that the driver is slowly stepping on a brake pedal. In this case, the vehicle speed of the vehicle is controlled to be inversely proportional to the brake pedal position, so that the vehicle speed can be controlled to decrease as the brake pedal position increases, thereby ensuring driving safety.

In an implementation, the control method further includes: At a third moment, the braking torque output by the wheel-end braking apparatus is controlled to decrease to zero.

In the foregoing implementation solution, when the vehicle speed of the vehicle reaches the first preset vehicle speed, it indicates that the vehicle has completed parking start. In this case, the braking torque output by the wheel-end braking apparatus is controlled to be zero, so that it can be ensured that the electric vehicle can perform cruise control at the first preset vehicle speed.

In an implementation, the control method further includes: When the vehicle is in an uphill parking start working condition, a braking torque decrease gradient of the wheel-end braking apparatus is controlled to be inversely proportional to a slope angle after the first moment.

When the vehicle is in the uphill parking start working condition, a weight of the vehicle may cause resistance to the vehicle. A larger slope angle indicates greater resistance caused by the weight of the vehicle to the vehicle. After the first moment, a larger braking torque decrease gradient of the wheel-end braking apparatus indicates a faster reduction of the braking torque, which easily cause the vehicle to slip. In the foregoing implementation solution, when the vehicle is in the uphill parking start working condition, the braking torque decrease gradient of the wheel-end braking apparatus is inversely proportional to the slope angle, so that the braking torque of the wheel-end braking apparatus can be reduced more slowly when the slope angle is larger, thereby preventing the vehicle from slipping.

In an implementation, the control method further includes: After the first moment, a braking torque decrease rate of the wheel-end braking apparatus is controlled to be directly proportional to a road adhesion coefficient.

After the vehicle is started, a larger road adhesion coefficient indicates larger resistance exerted by the road on the vehicle. Maintaining the braking torque decrease rate of the wheel-end braking apparatus unchanged may cause the vehicle speed of the vehicle to be increased very slowly, reducing starting efficiency of the vehicle. Similarly, a smaller road adhesion coefficient indicates smaller resistance exerted by the road on the vehicle. Maintaining the braking torque decrease rate of the wheel-end braking apparatus unchanged may cause the vehicle speed of the vehicle to be increased excessively fast, affecting driving safety. According to the foregoing solution, a larger road adhesion coefficient after the second moment indicates a larger braking torque decrease rate of the wheel-end braking apparatus. A smaller road adhesion coefficient after the second moment indicates a smaller braking torque decrease rate of the wheel-end braking apparatus. Based on this, the vehicle speed can be increased quickly and steadily with different road adhesion coefficients.

In an implementation, the control method further includes: When the vehicle is in a downhill parking start working condition, the driving torque output by the drive motor is controlled to be negative torque after the second moment.

When the vehicle is in the downhill parking start working condition, the weight of the vehicle provides auxiliary force for the vehicle to move downward along a hill. In this case, reduction of the braking torque of the wheel-end braking apparatus may cause the vehicle to slip. In the foregoing implementation solution, the driving torque output by the drive motor is controlled to be the negative torque after the second moment, so that the auxiliary force provided by the weight of the vehicle can be balanced, thereby preventing the vehicle from slipping.

In an implementation, the control method further includes: The vehicle speed of the vehicle is directly proportional to the accelerator pedal position at any moment between the third moment and the fourth moment.

In the foregoing implementation solution, the vehicle speed of the vehicle is directly proportional to the accelerator pedal position at any moment between the third moment and the fourth moment, so that the vehicle speed can be increased in time when the accelerator pedal position increases during cruise control of the vehicle, thereby ensuring that the vehicle can travel at a vehicle speed expected by the driver.

In an implementation, the control method further includes: before the fourth moment, the driving torque output by the drive motor is controlled not to respond to the accelerator pedal position. Based on this, when the accelerator pedal position changes during cruise control of the vehicle, the vehicle can also maintain cruise control, to avoid that a misoperation of the driver during cruise control affects comfort of the cruise control.

In an implementation, the control method further includes: The vehicle speed of the vehicle is equal to the first preset vehicle speed at any moment between the third moment and the fourth moment. Based on this, when the accelerator pedal position increases but is still less than the second preset accelerator pedal position, the vehicle can still maintain cruise control, thereby improving driving comfort.

In an implementation, the control method further includes: When the brake pedal position is increased to be greater than a first preset brake pedal position between a sixth moment and the fourth moment, the drive motor is controlled to output torque opposite to a rotational direction of the wheel. In this way, the drive motor switches from a driving state to a power generation state, so that the drive motor performs regenerative braking, to recycle energy while decelerating the vehicle.

In an implementation, the control method further includes: When the accelerator pedal position reaches the first preset accelerator pedal position at a seventh moment before the first moment, the first preset accelerator pedal position remains unchanged from the seventh moment to the first moment.

In the foregoing manner, the parking start process can be performed after the accelerator pedal position reaches and remains the first preset accelerator pedal position for a period of time, to avoid that the driver accidentally steps on the accelerator pedal in a parking case, which affects driving safety.

In an implementation, when the vehicle is started on a flat road, the control method further includes: When the accelerator pedal position decreases to zero at an eighth moment after the third moment, and the brake pedal position is greater than the first preset brake pedal position at a ninth moment after the eighth moment, the braking torque output by the wheel-end braking apparatus is controlled to be zero, and the driving torque output by the drive motor is controlled to start to decrease; and when the brake pedal position starts to decrease at a tenth moment after the ninth moment, the braking torque output by the wheel-end braking apparatus is controlled to be zero, and the driving torque output by the drive motor is controlled to increase from the negative torque.

In the foregoing implementation solution, the accelerator pedal position is reduced to zero at the eighth moment after the third moment, and the brake pedal position is greater than a second preset brake pedal position at the ninth moment after the eighth moment, indicating that the driver steps on the brake pedal after releasing the accelerator pedal. In this case, the vehicle enters a regenerative braking phase, and the driving torque output by the drive motor gradually decreases to the negative torque, and deceleration is performed in a power generation working condition. When the brake pedal position decreases again, it indicates that the driver is releasing the brake pedal. In this case, the driving torque output by the drive motor gradually increases from the negative torque, to ensure that the vehicle can continue to travel. Based on this, when the accelerator pedal is released and the brake pedal is stepped on after the parking start, the vehicle can be braked and energy can be recycled by regenerative braking, thereby improving endurance of the vehicle.

According to a second aspect, an embodiment of this application provides a controller. In a parking start process of a vehicle, the controller controls braking torque output by a wheel-end braking apparatus of the vehicle and driving torque output by a drive motor of the vehicle, to implement the control method in any implementation of the first aspect.

According to a third aspect, an embodiment of this application provides a vehicle. The vehicle performs comfort start in park by using the control method in any implementation of the first aspect.

It should be noted that the wheel-end braking apparatus in this application may be an electro-mechanical braking apparatus, an electro-hydraulic braking apparatus, or the like.

For technical principles and technical effects of the second aspect and the third aspect, refer to the descriptions of the first aspect. Details are not described herein again in this application.

### BRIEF DESCRIPTION OF DRAWINGS

FIG. 1 is a diagram of a vehicle according to an embodiment of this application;
FIG. 2 is another diagram of a vehicle according to an embodiment of this application;
FIG. 3 is a diagram of a brake system according to an embodiment of this application;
FIG. 4 is a diagram of an electro-mechanical braking apparatus according to an embodiment of this application;
FIG. 5 is a diagram of a parking start control process according to an embodiment of this application;
FIG. 6 is another diagram of a parking start control process according to an embodiment of this application;
FIG. 7 is another diagram of a parking start control process according to an embodiment of this application;
FIG. 8 is another diagram of a parking start control process according to an embodiment of this application;
FIG. 9 is another diagram of a parking start control process according to an embodiment of this application; and
FIG. 10 is another diagram of a parking start control process according to an embodiment of this application.

### DESCRIPTION OF EMBODIMENTS

In this application, "an embodiment" is used to represent giving an example, an illustration, or a description. A solution described as "an embodiment" in this application should not be explained as being more preferred or having more advantages than a solution in another embodiment. Specifically, "an embodiment" is used to present an inventive concept of this application in a specific manner.

With development of electric vehicles, the electric vehicles usually have an automatic parking function. For example, for an electric vehicle equipped with an automatic vehicle hold (auto vehicle hold, AVH) system, the automatic vehicle hold system can automatically park the electric vehicle after the electric vehicle decelerates to a stop. In addition, a hill hold control (hill hold control, HHC) function and a hill descent control (hill descent control, HDC) function of an electric vehicle can assist the electric vehicle in automatically parking when the vehicle decelerates to a stop during hill traveling. However, after the electric vehicle is parked, a driver needs to operate an accelerator pedal to complete parking start of the electric vehicle. The driver operates the accelerator pedal to complete parking start of the electric vehicle, which may cause a problem that the electric vehicle lurches forward due to an excessive accelerator pedal position, and a sense of jerk on a vehicle body caused by a torque ripple during switching between braking torque output by a wheel-end braking apparatus and driving torque output by a drive motor. Consequently, comfort of parking start of the electric vehicle is affected, and driving and riding experience of a user is diminished.

To resolve the foregoing problems, embodiments of this application provide a comfort start control method for a vehicle in park, a controller, and a vehicle. The control method is used to perform collaborative control on braking torque output by a wheel-end braking apparatus of the vehicle and driving torque output by a drive motor of the vehicle in a parking start process of the vehicle. Specifically, in the control method, when an accelerator pedal position of the vehicle is greater than or equal to a first preset accelerator pedal position after the vehicle is parked, the wheel-end braking apparatus is first controlled to reduce the output braking torque. Then, when the braking torque output by the wheel-end braking apparatus is reduced to be less than or equal to a first preset braking torque value, the drive motor is controlled to output the driving torque.

Based on this, when a driver steps on an accelerator pedal in the parking start process, the vehicle can actively reduce the braking torque output by the wheel-end braking apparatus, and after the braking torque output by the wheel-end braking apparatus is reduced to a specific value, the vehicle can actively control the drive motor to output the driving torque. This prevents the electric vehicle from lurching forward and alleviates a sense of jerk during switching between the braking torque output by the wheel-end braking apparatus and the driving torque output by the drive motor, so that the vehicle can be started more smoothly after parking, enhancing driving and riding experience of a user.

It should be noted that the wheel-end braking apparatus in this application may be an electro-mechanical braking apparatus, an electro-hydraulic braking apparatus, or the like. In this embodiment of this application, the electro-mechanical braking apparatus is used as an example for description. The following describes the technical solutions of embodiments in this application with reference to the accompanying drawings.

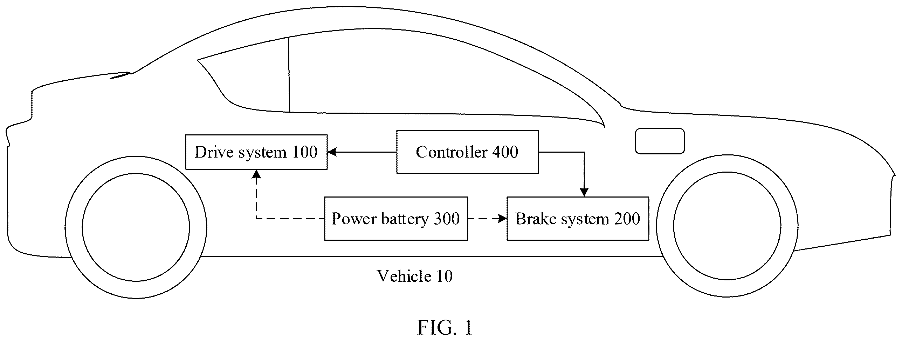

FIG. 1 is a diagram of a vehicle according to an embodiment of this application. As shown in FIG. 1, the vehicle 10 usually includes a drive system 100, a brake system 200, a power battery 300, and a controller 400. Usually, the drive system 100, the brake system 200, and the controller 400 are communicatively connected and exchange signals via a communication bus. The communication bus includes a controller area network (controller area network, CAN) bus, a local interconnect network (local interconnect network, LIN) bus, a high-speed fault-tolerant network protocol (FlexRay) or another type of bus. This is not limited herein. In addition, the drive system 100 is configured to drive a wheel of the vehicle 10 to rotate, to drive the vehicle 10 to travel. The brake system 200 is configured to brake the wheel of the vehicle 10 to slow down the vehicle 10. The power battery 300 is configured to supply power to the drive system 100, the brake system 200, the controller 400, and the like. The controller 400 is configured to control the drive system 100 and the brake system 200.

The power battery 300 in this embodiment of this application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. This is not limited herein. In terms of a scale, the power battery 300 in this embodiment of this application may be an individual cell, or may be a battery module or a battery pack. This is not limited herein. The power battery 300 may further supply power to another power-consuming device in the vehicle 10, for example, supply power to an in-vehicle air conditioner, an in-vehicle player, or the like.

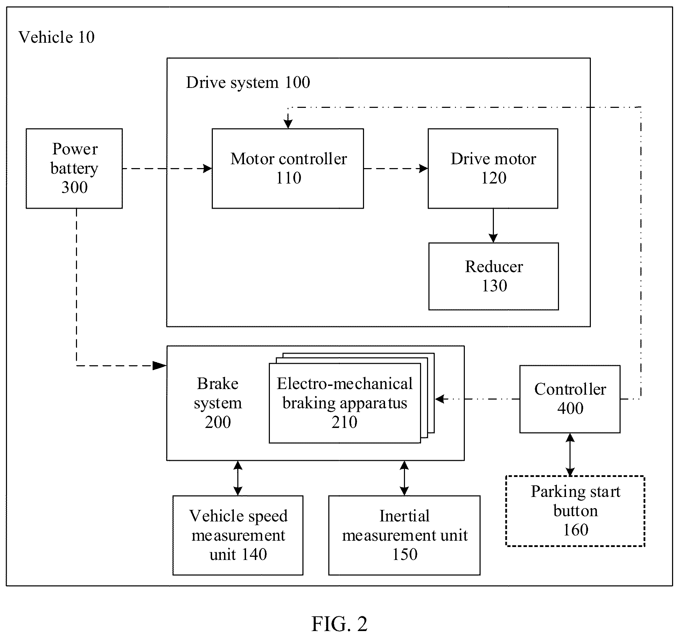

FIG. 2 is another diagram of a vehicle according to an embodiment of this application. As shown in FIG. 2, in an embodiment, a drive system 100 includes a motor controller 110, a drive motor 120, and a reducer 130. The motor controller 110 is configured to: receive, according to a control instruction sent by a controller 400, a direct current output by a power battery 300, and output an alternating current to control the drive motor 120 to output driving torque. The drive motor 120 drives a wheel of the vehicle 10 by using the reducer 130.

In an embodiment, the vehicle 10 further includes a vehicle speed measurement unit 140. As shown in FIG. 2, the vehicle speed measurement unit 140 is configured to detect a vehicle speed of the vehicle 10. The controller 400 can actively adjust, in a parking start process based on the vehicle speed detected by the vehicle speed measurement unit 140, the driving torque output by the drive motor 120. The vehicle speed measurement unit 140 uses a resolver or a vehicle speed sensor. The vehicle speed sensor usually uses a magnetoresistive sensor or a Hall effect sensor. The magnetoresistive sensor measures the vehicle speed by detecting a magnetic field change. The Hall effect sensor measures the vehicle speed by detecting a voltage generated by a magnetic field change. The resolver is configured to collect a rotation speed of the drive motor 120, and the controller 400 may calculate the vehicle speed of the vehicle 10 based on the rotation speed of the drive motor 120. Because the resolver can detect the rotational speed of the drive motor more quickly and accurately, the vehicle speed measurement unit 140 uses the resolver in many cases.

In an embodiment, still as shown in FIG. 2, the vehicle 10 further includes an inertial measurement unit (inertial measurement unit, IMU) 150. The inertial measurement unit 150 can detect an acceleration of the vehicle 10. The controller 400 can actively adjust, based on the acceleration of the vehicle 10 detected by the inertial measurement unit 150, the driving torque output by the drive motor 120, to smoothly accelerate the vehicle 10 in the parking start process.

In an embodiment, still as shown in FIG. 2, the vehicle speed measurement unit 140 and the inertial measurement unit 150 are communicatively connected to the controller 400 through a brake system 200. Certainly, the vehicle speed measurement unit 140 and the inertial measurement unit 150 may alternatively be directly communicatively connected to the controller 400 via a communication bus, or communicatively connected to the controller 400 through the drive system 100.

In an embodiment, the vehicle 10 further includes a parking start button 160. The parking start button 160 may be connected to the controller 400. When a driver needs the vehicle 10 to enable a parking start function, the driver may press the parking start button 160. When the driver wants the vehicle 10 to exit the parking start function, the driver may press the parking start button 160 again, or parking start may be automatically terminated when the vehicle speed of the vehicle 10 increases to a high speed (for example, 10 km/h).

The brake system 200 includes a plurality of electro-mechanical braking apparatuses 210. The controller 400 may output a braking signal to the electro-mechanical braking apparatus 210 in response to a brake pedal position, to control braking torque output by the electro-mechanical braking apparatus 210. The brake pedal position (also referred to as a brake pedal stroke) is a variation of the brake pedal stroke when the driver actively steps on a brake pedal.

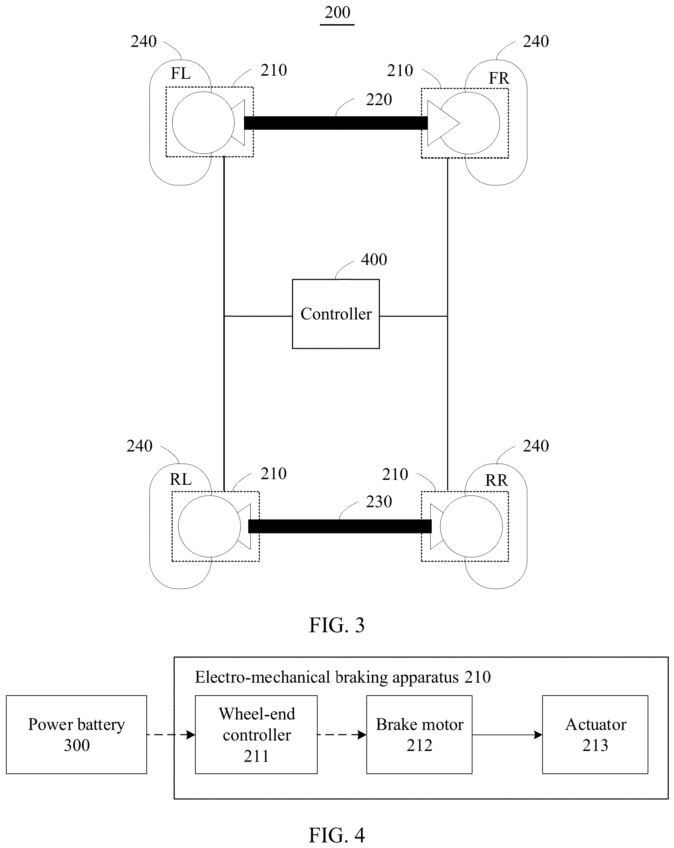

FIG. 3 is a diagram of a brake system according to an embodiment of this application. As shown in FIG. 3, a vehicle 10 includes four wheels 240. The brake system 200 usually includes four electro-mechanical braking apparatuses 210. The four electro-mechanical braking apparatuses 210 are respectively configured to brake the four wheels 240 of the vehicle 10. Each electro-mechanical braking apparatus 210 is configured to brake one wheel 240 of the vehicle 10.

In an embodiment, two wheels 240 corresponding to a front axle 220 of the vehicle 10 are a front left wheel FL and a front right wheel FR, and two wheels 240 corresponding to a rear axle 230 of the vehicle 10 are a rear left wheel RL and a rear right wheel RR. Two electro-mechanical braking apparatuses 210 are respectively configured to brake the front left wheel FL and the front right wheel FR of the vehicle 10, and the other two electro-mechanical braking apparatuses 210 are respectively configured to brake the rear left wheel RL and the rear right wheel RR of the vehicle 10.

As shown in FIG. 3, the vehicle 10 includes one or more controllers 400. The controller 400 sends a braking signal to the electro-mechanical braking apparatus 210 after a driver steps on a brake pedal, to control the electro-mechanical braking apparatus 210 to output braking torque, braking a corresponding wheel. In this embodiment of this application, each controller 400 is configured to output a braking signal to control one or more electro-mechanical braking apparatuses 210.

In an embodiment, the brake system 200 includes one controller 400 and four electro-mechanical braking apparatuses 210. After the driver steps on the brake pedal, the controller 400 controls the four electro-mechanical braking apparatuses 210 to brake the four wheels 240 of the vehicle 10 respectively.

In an embodiment, the brake system 200 includes two controllers 400 and four electro-mechanical braking apparatuses 210. After the driver steps on the brake pedal, one controller 400 controls two electro-mechanical braking apparatuses 210 to brake two front wheels of the vehicle 10, and the other controller 400 controls the other two electro-mechanical braking apparatuses 210 to brake two rear wheels of the vehicle 10.

In an embodiment, the brake system 200 includes four controllers 400 and four electro-mechanical braking apparatuses 210. After the driver steps on the brake pedal, the four controllers 400 respectively control the four electro-mechanical braking apparatuses 210 to brake the four wheels 240 of the electric vehicle.

In an embodiment, during braking of the vehicle 10, a drive motor 120 can generate torque opposite to a rotational direction of the wheel in rotation, thereby performing regenerative braking on the vehicle to recover energy while braking. During regenerative braking, driving torque output by the drive motor 120 gradually decreases to negative torque as braking duration increases. After the brake pedal is released or when the energy recovery reaches an upper limit, the driving torque output by the drive motor 120 increases from the negative torque.

FIG. 4 is a diagram of an electro-mechanical braking apparatus according to an embodiment of this application. As shown in FIG. 4, when an electro-mechanical braking apparatus 210 is used, the electro-mechanical braking apparatus 210 includes a wheel-end controller 211, a brake motor 212, and an actuator 213. The wheel-end controller 211 is configured to: receive a braking signal output by a controller 400 and control the brake motor 212 to output braking torque. The actuator 213 is configured to drive, based on the braking torque output by the brake motor 212, a caliper to clamp a brake disc of a corresponding wheel.

In an embodiment, the wheel-end controller 211 in the electro-mechanical braking apparatus 210 includes a motor controller 110 in a drive system 100.

In an embodiment, the controller 400 is a central controller in a vehicle 10, a vehicle control unit (vehicle control unit, VCU), or a domain control unit (domain control unit, DCU) in the vehicle 10.

During traveling of the vehicle 10, a driver needs to make a short stop in scenarios such as stopping to yield to a pedestrian, stopping at an intersection for traffic lights, and stopping due to traffic congestion. In the foregoing scenarios, an automatic vehicle hold system controls, after the vehicle 10 stops, the electro-mechanical braking apparatus 210 to output braking torque, to perform parking braking on a wheel of the vehicle 10. In addition, a hill parking function of the vehicle 10 is also triggered when the vehicle temporarily stops in a process of uphill or downhill, to control the brake motor 212 in the electro-mechanical braking apparatus 210 to output braking torque to perform parking braking on the wheel of the vehicle 10.

When the vehicle 10 is in a parking braking state, the vehicle 10 remains stationary. In this case, the braking torque output by the electro-mechanical braking apparatus 210 remains unchanged. When the vehicle 10 needs to be restarted, the driver needs to operate an accelerator pedal based on driving experience, to complete parking start of the vehicle 10. However, during parking start, uncertainty of the driver in an accelerator pedal position may cause the vehicle 10 to lurch forward or cause a sense of jerk generated during switching between the braking torque output by the brake motor 212 in the electro-mechanical braking apparatus 210 and driving torque output by a drive motor 120, affecting comfort of parking start.

According to the comfort start control method for a vehicle in park provided in this embodiment of this application, when the driver steps on the accelerator pedal and the accelerator pedal position is greater than or equal to a first preset accelerator pedal position, the electro-mechanical braking apparatus 210 can be actively controlled to reduce the output braking torque. Then, when the braking torque output by the electro-mechanical braking apparatus 210 is less than or equal to the first preset braking torque value, the drive motor 120 is actively controlled to output the driving torque. Based on this, in the parking start process, the braking torque output by the electro-mechanical braking apparatus 210 and the driving torque output by the drive motor 120 can be controlled to be smoothly switched, so that the vehicle 10 can be accelerated more smoothly, thereby improving comfort of parking start.

In an embodiment, when the vehicle 10 is in an uphill parking start working condition and a downhill parking start working condition, a weight of the vehicle 10 affects starting of the vehicle 10, and causes the vehicle 10 to slip. Therefore, the vehicle 10 may further use, based on the impact of the weight of the vehicle 10 on the parking start in the uphill parking start working condition and the downhill parking start working condition, a targeted control policy on the braking torque output by the brake motor 212 in the electro-mechanical braking apparatus 210 and the driving torque output by the drive motor 120. For example, in the uphill parking start working condition and the downhill parking start working condition, a braking torque reduction value during outputting of the driving torque by the drive motor 120 is less than a braking torque reduction value during flat road driving, to avoid slipping of the vehicle 10 due to an excessive braking torque reduction value.

In an embodiment, when some emergency working conditions (for example, the driver quickly steps on the brake pedal) occur in the parking start process, the vehicle 10 should adjust, in response to the emergency working conditions, the braking torque output by the electro-mechanical braking apparatus 210 and/or the driving torque output by the drive motor 120.

For ease of understanding, the following describes the comfort start control method for a vehicle in park, the controller, and the vehicle that are provided in embodiments of this application with reference to a first moment t₁, a second moment t₂, a third moment t₃, a fourth moment t₄, a fifth moment t₅, a sixth moment t₆, a seventh moment t₇, and an eighth moment t₈ in the parking start process of the vehicle 10.

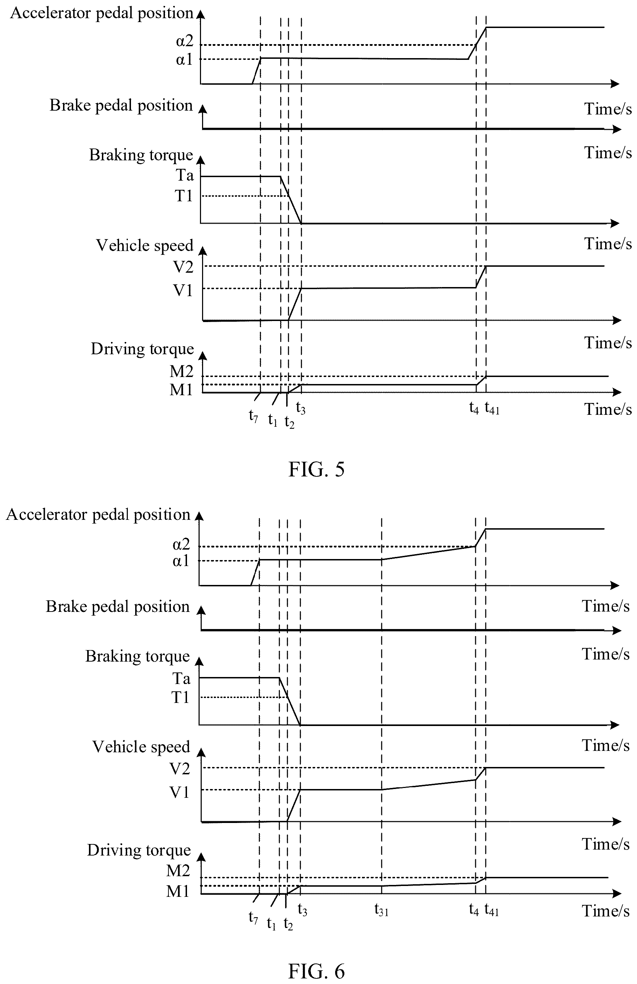

FIG. 5 is a diagram of a parking start control process according to an embodiment of this application.

After a driver steps on a brake pedal to control the vehicle 10 during traveling to decelerate to a stop, a controller 400 controls an electro-mechanical braking apparatus 210 of the vehicle 10 to output a first parking braking torque Ta. Then, when an accelerator pedal position of the vehicle 10 increases to be greater than or equal to a first preset accelerator pedal position α1 at a first moment t₁, the controller 400 controls the electro-mechanical braking apparatus 210 to reduce the output braking torque. When the braking torque output by the electro-mechanical braking apparatus 210 is less than or equal to a first preset braking torque value T1 at a second moment t₂ after the first moment t₁, the controller 400 controls a drive motor 120 to output driving torque.

The accelerator pedal position of the vehicle 10 increases to be greater than or equal to the first preset accelerator pedal position α1 at the first moment t₁, indicating that the electric vehicle needs to perform parking start. In this case, if the braking torque output by the electro-mechanical braking apparatus 210 remains unchanged, the driving torque output by the drive motor 120 subsequently needs to be very large to start the vehicle, affecting parking start efficiency of the vehicle 10.

As shown in FIG. 5, in this embodiment of this application, when the accelerator pedal position increases to the first preset accelerator pedal position α1 at the first moment t₁, the controller 400 actively controls the electro-mechanical braking apparatus 210 to reduce the output braking torque. Based on this, it can be ensured that the vehicle can be started when the drive motor 120 outputs relatively small driving torque subsequently.

Then, when the braking torque output by the electro-mechanical braking apparatus 210 is less than or equal to the first preset braking torque value T1 at the second moment t₂ after the first moment t₁, it indicates that the braking torque output by the electro-mechanical braking apparatus 210 is small in this case. In this case, the controller 400 controls the drive motor 120 to output small driving torque, so that the vehicle 10 can be accelerated more smoothly, thereby avoiding a startup delay caused by an improper operation of the driver. In addition, according to the foregoing controller method, a sense of jerk generated during switching between the braking torque output by the electro-mechanical braking apparatus and the driving torque output by the drive motor can be alleviated, so that the vehicle is started more comfortably, thereby enhancing user experience.

In this embodiment of this application, the first preset accelerator pedal position α1 is set to a small value, for example, 10% of a total accelerator pedal position. When the vehicle 10 is in a flat-road parking start working condition, the first preset braking torque value T1 may be a very small value. When the vehicle 10 is in the flat-road parking start working condition, the first preset braking torque value T1 may be a calibration value set based on a weight of the vehicle 10 and a road adhesion coefficient. This is not specifically limited in this embodiment of this application.

When the vehicle 10 is in an uphill parking start working condition or a downhill parking start working condition, because the weight of the vehicle 10 has more significant impact on starting of the vehicle 10, the first preset braking torque value T1 should be set to a larger value in the uphill parking start working condition or the downhill parking start working condition. The first preset braking torque value T1 may be calibrated based on a plurality of influence factors such as the weight of the vehicle, a slope angle, and the road adhesion coefficient. This is not specifically limited in this embodiment of this application.

In an embodiment, when a vehicle speed of the vehicle reaches a first preset vehicle speed V1 at a third moment t₃ after the second moment t₂, the controller 400 controls the drive motor 120 to output first driving torque M1. The first driving torque M1 is torque required for maintaining the vehicle speed of the vehicle 10 at the first preset vehicle speed V1. When the accelerator pedal position is greater than a second preset accelerator pedal position α2 at a fourth moment t₄ after the third moment t₃, the controller 400 controls the driving torque output by the drive motor 120 to respond to the accelerator pedal position.

Still as shown in FIG. 5, the vehicle speed of the vehicle reaches the first preset vehicle speed V1 at the third moment t₃ after the second moment t₂, indicating that the vehicle 10 has been started. In this case, the controller 400 controls the drive motor 120 to output the first driving torque M1, so that the vehicle 10 performs cruise control at the first preset vehicle speed V1, thereby reducing operation difficulty of the driver and further enhancing driving and riding experience.

The accelerator pedal position is greater than or equal to the second preset accelerator pedal position α2 at the fourth moment t₄ after the third moment t₃, indicating that the driver wants the vehicle 10 to accelerate in this case. In this case, the controller 400 controls the driving torque output by the drive motor 120 in response to the accelerator pedal position, to increase the driving torque output by the drive motor 120.

In an embodiment, still as shown in FIG. 5, after the accelerator pedal position increases to the second preset accelerator pedal position α2, the controller 400 controls, in response to the accelerator pedal position increase, the drive motor 120 to increase the output driving torque, to increase the vehicle speed of the vehicle 10. After the controller 400 obtains that the accelerator pedal position increases to be greater than or equal to the second preset accelerator pedal position α2, there is a specific delay in adjusting the driving torque output by the drive motor 120. Therefore, a moment at which the driving torque output by the drive motor 120 increases is slightly later than a moment at which the accelerator pedal position increases. The delay is usually in milliseconds or microseconds, and a specific value of the delay may be determined based on a parameter such as a communication delay between the controller 400 and the drive motor 120, a calculation frequency of the controller 400, and a response speed of the drive motor 120. This is not specifically limited in this embodiment of this application.

Then, when the vehicle speed of the vehicle 10 reaches a second preset vehicle speed V2 at a moment t₄₁ after the fourth moment t₄, the controller 400 controls the drive motor 120 to output second driving torque M2, to ensure that the vehicle 10 can maintain cruise control at the second preset vehicle speed V2, thereby reducing operation difficulty of the driver.

In an embodiment, the controller 400 controls, at the third moment t₃, the braking torque output by the electro-mechanical braking apparatus 210 to decrease to zero.

When the braking torque output by the electro-mechanical braking apparatus 210 is greater than zero at the third moment t₃, driving force generated on the vehicle by the driving torque output from the drive motor 120 is affected by the braking torque. Consequently, an acceleration of the vehicle 10 is excessively small, and the vehicle 10 cannot speed up to the first preset vehicle speed V1 at the third moment t₃, reducing parking start efficiency of the vehicle 10.

In this embodiment of this application, when the controller 400 controls, at the third moment t₃, the braking torque output by the electro-mechanical braking apparatus 210 to decrease to zero, the vehicle speed of the vehicle 10 is no longer affected by the braking torque. The controller 400 can more stably control, through the driving torque output by the drive motor 120, the vehicle 10 to perform cruise control at the first preset vehicle speed V1, thereby improving parking start efficiency of the vehicle 10.

In an embodiment, the accelerator pedal position reaches the first preset accelerator pedal position α1 at a seventh moment t₇ before the first moment t₁, and the accelerator pedal position remains unchanged from the seventh moment t₇ to the first moment t₁.

Still as shown in FIG. 5, the accelerator pedal position reaches the first preset accelerator pedal position α1 at the seventh moment t₇ before the first moment t₁, indicating that an accelerator pedal position after the driver steps on an accelerator pedal has reached a trigger condition for parking start. However, during traveling of the vehicle 10, the driver may step on the accelerator pedal accidentally, and consequently the accelerator pedal position reaches the first preset accelerator pedal position α1. In this case, a safety accident may be caused when the controller 400 controls the electro-mechanical braking apparatus 210 to reduce the output braking torque to perform parking start.

In this embodiment of this application, when the accelerator pedal position reaches the first preset accelerator pedal position α1 at the seventh moment t₇ and the accelerator pedal position remains unchanged from the seventh moment t₇ to the first moment t₁, the controller 400 controls the electro-mechanical braking apparatus 210 to reduce the output braking torque to perform parking start. Based on this, the electro-mechanical braking apparatus 210 and the drive motor 120 are collaboratively controlled when a real intention of the driver is to perform parking start, to complete the parking start. This avoids that the controller 400 controls the vehicle 10 to perform parking start when the driver accidentally steps on the accelerator pedal, which affects driving safety.

In an embodiment, still as shown in FIG. 5, the vehicle speed of the vehicle 10 is equal to the first preset vehicle speed V1 at any moment between the third moment t₃ and the fourth moment t₄.

In this embodiment of this application, at any moment between the third moment t₃ and the fourth moment t₄, the controller 400 controls the vehicle speed of the vehicle 10 to be equal to the first preset vehicle speed V1, so that the vehicle 10 can be controlled to perform cruise control at the first preset vehicle speed V1 while maintaining both the accelerator pedal and the brake pedal unchanged, thereby reducing operation difficulty of the driver and reducing energy consumption of the vehicle 10.

In an embodiment, the controller 400 controls, after the first moment t₁, a braking torque decrease rate of the electro-mechanical braking apparatus 210 to be directly proportional to the road adhesion coefficient.

The vehicle 10 is affected by road resistance during traveling. The road resistance is related to the road adhesion coefficient and the weight of the vehicle 10. When the weight of the vehicle 10 remains unchanged, a larger road adhesion coefficient indicates a larger road resistance. When the road resistance is larger, maintaining the braking torque decrease rate of the electro-mechanical braking apparatus 210 unchanged may cause the vehicle 10 to start slowly.

In this embodiment of this application, after the first moment t₁, the braking torque decrease rate of the electro-mechanical braking apparatus 210 is controlled to be directly proportional to the road adhesion coefficient, so that the braking torque decrease rate can be increased when the road adhesion coefficient increases, thereby ensuring that the vehicle 10 can complete parking start within a same time when parking start is performed on roads with different road adhesion coefficients.

In an embodiment, the vehicle speed of the vehicle 10 is directly proportional to the accelerator pedal position at any moment between the third moment t₃ and the fourth moment t₄.

An increase in the accelerator pedal position between the third moment t₃ and the fourth moment t₄ indicates that the driver wants to control the vehicle 10 to accelerate. In this case, the controller 400 should control the vehicle speed of the vehicle 10 to increase, so that the vehicle accelerates in time.

FIG. 6 is another diagram of a parking start control process according to an embodiment of this application.

As shown in FIG. 6, at a moment t₃₁ between a third moment t₃ and a fourth moment t₄, a driver further steps on an accelerator pedal, so that a brake pedal position gradually increases. A controller 400 controls driving torque output by a drive motor 120 to gradually increase, so that a vehicle speed of a vehicle 10 gradually increases.

In this embodiment of this application, an increase in the accelerator pedal position at any moment between the third moment t₃ and the fourth moment t₄ indicates that the driver wants to control the vehicle 10 to accelerate. In this case, the controller 400 may control, in response to the increase in the accelerator pedal position, the drive motor 120 to increase the output driving torque, to increase the vehicle speed of the vehicle 10, so that the vehicle 10 can further accelerate.

In an embodiment, before the fourth moment t₄, the controller 400 controls the driving torque output by the drive motor 120 not to respond to the accelerator pedal position.

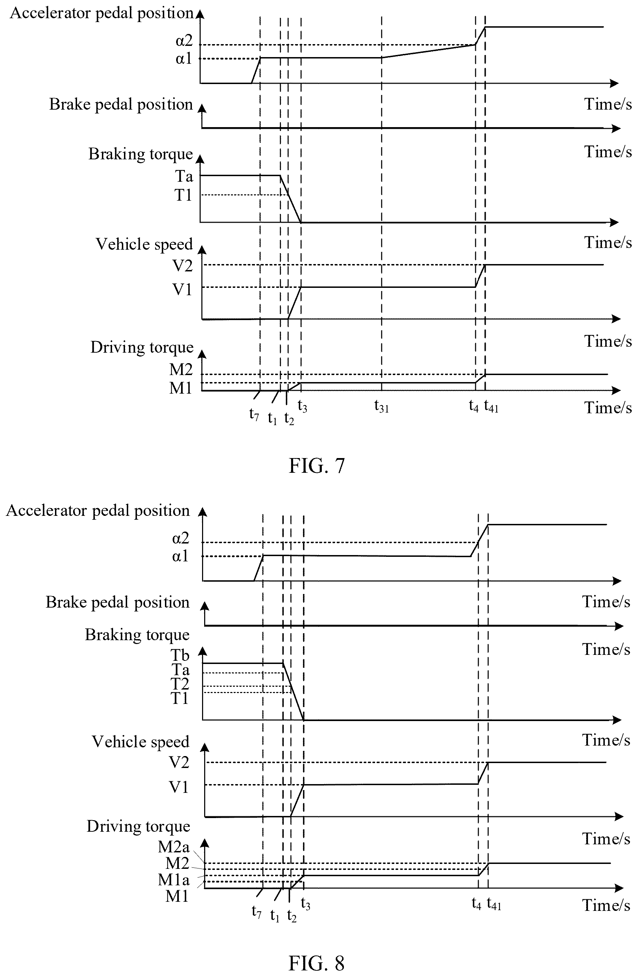

FIG. 7 is another diagram of a parking start control process according to an embodiment of this application.

As shown in FIG. 7, at a moment t₃₁ between a third moment t₃ and a fourth moment t₄, a driver further steps on an accelerator pedal, so that a brake pedal position gradually increases. A controller 400 still controls a drive motor 120 to output a first driving torque M1, to ensure that a vehicle 10 can still perform cruise control at a first preset vehicle speed V1.

In this embodiment of this application, after the vehicle 10 starts the cruise control at the third moment t₃, the driver may step on the accelerator pedal accidentally. In this case, the controller 400 controls driving torque output by the drive motor 120 not to respond to the accelerator pedal position, so that the vehicle 10 can travel more safely.

In addition, on a rainy or snowy road, after the vehicle 10 completes parking start and performs cruise control, the driver continues to step on the accelerator pedal, which may cause a safety accident. In this case, the controller 400 may also control the driving torque output by the drive motor 120 not to respond to the accelerator pedal position.

Further, in various cases in which the vehicle needs to travel at a low speed, for example, a distance from a vehicle in front is short, or rain is excessively heavy, the controller 400 may also control the driving torque output by the drive motor 120 not to respond to the accelerator pedal position, to ensure driving safety.

In an embodiment, when a brake pedal position increase rate of the vehicle 10 is greater than a first preset brake pedal position increase rate (for example, 10 mm/s) at any moment between the third moment t₃ and the fourth moment t₄, driving torque output by the drive motor 120 is controlled to be zero, and an electro-mechanical braking apparatus 210 is controlled to respond to a brake pedal position of the vehicle.

The brake pedal position increase rate is greater than the first preset brake pedal position increase rate at any moment between the third moment t₃ and the fourth moment t₄, indicating that the driver is quickly stepping on a brake pedal. In this case, the vehicle 10 usually encounters an emergency during traveling. To ensure driving safety, the controller 400 requires the drive motor 120 to stop outputting the driving torque, to avoid an increase in a braking distance of the vehicle 10. In addition, the controller 400 controls, in response to the brake pedal position of the vehicle, the electro-mechanical braking apparatus 210 to output corresponding braking torque, thereby braking the vehicle 10 in time to avoid a safety accident.

In an embodiment, when the brake pedal position increase rate of the vehicle 10 is less than or equal to the first preset brake pedal position increase rate (for example, 10 mm/s) at any moment between the third moment t₃ and the fourth moment t₄, the controller 400 controls a vehicle speed of the vehicle 10 to be inversely proportional to the brake pedal position. That is, a larger brake pedal position increase rate at any moment between the third moment t₃ and the fourth moment t₄ indicates a lower vehicle speed of the vehicle 10.

In this embodiment of this application, the brake pedal position increase rate is less than or equal to the first preset brake pedal position increase rate, indicating that the driver is lightly stepping on the brake pedal. In this case, the controller 400 may gradually increase, in response to an increase in the brake pedal position, the braking torque output by the electro-mechanical braking apparatus 210, to slowly decelerate the vehicle 10.

FIG. 8 is another diagram of a parking start control process according to an embodiment of this application.

As shown in FIG. 8, when a vehicle 10 is in an uphill parking start working condition, and after a driver steps on a brake pedal to control the vehicle 10 during traveling to decelerate to a stop, a controller 400 controls an electro-mechanical braking apparatus 210 of the vehicle 10 to output second parking braking torque Tb. The second parking braking torque Tb is greater than the first parking braking torque Ta.

When the vehicle 10 is in the uphill parking start working condition, a weight of the vehicle 10 exerts resistance on the vehicle 10 in a direction opposite to a traveling direction. To prevent the vehicle 10 from slipping, the second parking braking torque Tb should be greater than the first parking braking torque Ta.

Based on a same technical principle as that of a flat-road parking start, when an accelerator pedal position of the vehicle 10 increases to be greater than or equal to a first preset accelerator pedal position α1 at a first moment t₁, the controller 400 controls the electro-mechanical braking apparatus 210 to reduce the output braking torque. When the braking torque output by the electro-mechanical braking apparatus 210 is less than or equal to a preset braking torque value T2 at a second moment t₂ after the first moment t₁, the controller 400 controls a drive motor 120 to output driving torque.

The driving torque output by the drive motor 120 in the uphill parking start working condition should be greater than driving torque in a flat-road parking start working condition. The preset braking torque value T2 in the uphill parking start working condition should be greater than a first braking torque value T1 in the flat-road parking start working condition.

Based on a same technical principle, when a vehicle speed of the vehicle reaches a first preset vehicle speed V1 at a third moment t₃ after the second moment t₂, the controller 400 controls the drive motor 120 to output driving torque M1a. The driving torque M1a is torque required for maintaining the vehicle speed of the vehicle 10 at the first preset vehicle speed V1.

It should be understood that, the weight of the vehicle 10 exerts resistance in the uphill parking start working condition. Therefore, the driving torque M1a should be greater than first driving torque M1 in the flat-road parking start working condition. Based on this, in the uphill parking start working condition, the controller 400 may still control the vehicle speed of the vehicle 10 to maintain the first preset vehicle speed V1 for cruise control, thereby reducing operation difficulty of the driver.

Based on a same technical principle, still as shown in FIG. 8, in the uphill parking start working condition, driving torque M2a output by the drive motor 120 at a moment t₄₁ is greater than second driving torque M2. Based on this, when the accelerator pedal position increases in the uphill parking start working condition, the controller 400 may still control, at the moment t₄₁, the vehicle 10 to perform cruise control at a vehicle speed V2 in the flat-road parking start working condition.

In an embodiment, the vehicle 10 is in the uphill parking start working condition, and after the first moment t₁, a decrease gradient of the braking torque output by the electro-mechanical braking apparatus 210 is controlled to be inversely proportional to a slope angle.

When the vehicle 10 is in the uphill parking start working condition, a larger slope angle indicates larger resistance exerted by the weight of the vehicle 10. When the slope angle increases, if a braking torque decrease rate remains unchanged, braking force provided by the braking torque output by the electro-mechanical braking apparatus 210 after the first moment t₁ is less than a sum of the resistance exerted by the weight of the vehicle 10 and road resistance. As a result, the vehicle 10 slips.

In this embodiment of this application, the braking torque decrease gradient of the electro-mechanical braking apparatus 210 is inversely proportional to the slope angle, so that when the slope angle is larger, the braking torque decrease rate after the first moment t₁ is smaller. Based on this, at a same moment after the first moment t₁, braking torque output by the electro-mechanical braking apparatus 210 when the slope angle is small is less than braking torque output when the slope angle is large. This can prevent the vehicle 10 from sliding due to excessively small braking torque when the resistance exerted by the weight of the vehicle 10 increases with the slope angle.

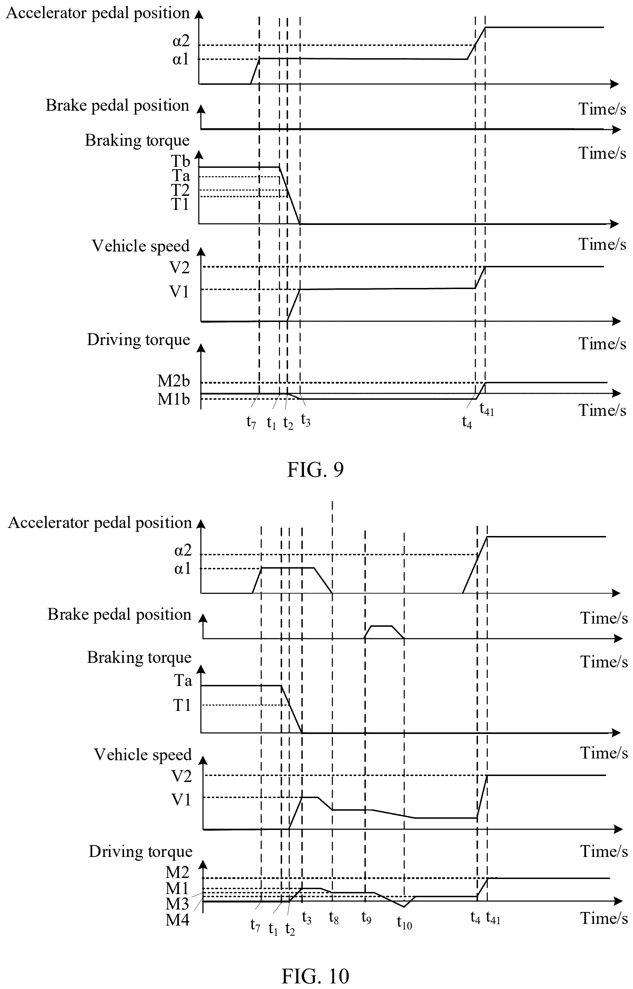

FIG. 9 is another diagram of a parking start control process according to an embodiment of this application.

As shown in FIG. 9, when a vehicle 10 is in a downhill parking start working condition, and braking torque output by an electro-mechanical braking apparatus 210 is less than or equal to a preset braking torque value T2 at a second moment t₂ after a first moment t₁, a controller 400 controls driving torque output by a drive motor 120 to be negative torque.

When the vehicle 10 is in the downhill parking start working condition, a weight of the vehicle 10 exerts auxiliary force on the vehicle 10 in the same direction as a traveling direction. In this case, when the braking torque output by the electro-mechanical braking apparatus 210 is reduced, the vehicle travels down even if the drive motor 120 does not output driving torque. However, when the braking torque output by the electro-mechanical braking apparatus 210 is excessively small, the vehicle 10 may lurch forward. Therefore, to prevent the vehicle 10 from lurching forward when the braking torque output by the electro-mechanical braking apparatus 210 decreases, the drive motor 120 outputs negative torque at the second moment t₂. A sum of braking force provided by the negative torque M1b for the vehicle 10 and braking force provided by the braking torque for the vehicle should be less than the auxiliary force provided by the weight of the vehicle, to ensure that the vehicle 10 can normally perform parking start.

Based on a same technical principle, when a vehicle speed of the vehicle reaches a first preset vehicle speed V1 at a third moment t₃ after the second moment t₂, the controller 400 controls the drive motor 120 to output the negative torque M1b. Because the weight of the vehicle 10 generates the auxiliary force on the vehicle 10 in the same direction as the traveling direction, an absolute value of the negative torque M1b is less than first driving torque M1.

Further, still as shown in FIG. 9, when the vehicle 10 is in the downhill parking start working condition, and an accelerator pedal position is greater than a second preset accelerator pedal position α2 at a fourth moment t₄ after the third moment t₃, the controller 400 controls, in response to an increase in the accelerator pedal position, the driving torque output by the drive motor 120 to gradually increase from the negative torque M1b.

Then, when the vehicle speed of the vehicle 10 reaches a second preset vehicle speed V2 at a moment t₄₁ after the fourth moment t₄, the controller 400 controls the drive motor 120 to output driving torque M2b, to ensure that the vehicle 10 can maintain cruise control at the second preset vehicle speed V2, thereby reducing operation difficulty of a driver. Because the weight of the vehicle 10 generates the auxiliary force on the vehicle 10 in the same direction as the traveling direction, the driving torque M2b is less than second driving torque M2.

In an embodiment, when the accelerator pedal position decreases at a fifth moment t₃ between the third moment t₃ and the fourth moment t₄, the controller 400 controls the drive motor 120 to reduce the output driving torque. When the vehicle speed of the vehicle decreases to the second preset vehicle speed V2 at a sixth moment t₆ between the fifth moment t₅ and the fourth moment t₄, the controller 400 controls the drive motor to output the second driving torque M2. The second driving torque M2 is torque required for maintaining the vehicle speed of the vehicle at the second preset vehicle speed V2.

FIG. 10 is another diagram of a parking start control process according to an embodiment of this application.

As shown in FIG. 10, a decrease in an accelerator pedal position after a third moment t₃ indicates that a driver is releasing an accelerator pedal. In this case, a vehicle 10 needs to decelerate. Therefore, a controller 400 controls braking torque output by an electro-mechanical braking apparatus 210 to be zero, and controls driving torque output by a drive motor 120 to gradually decrease, so that a vehicle speed of the vehicle 10 gradually decreases. Because there is a communication delay and an operation delay between the controller 400 and the drive motor 120, a moment at which the driving torque output by the drive motor 120 decreases is slightly later than a moment at which the accelerator pedal position decreases.

The vehicle 10 travels in a flat-road working condition. When the accelerator pedal position decreases to zero at an eighth moment t₈ after the third moment t₃, the vehicle speed of the vehicle 10 is reduced to V3, and the controller 400 controls the drive motor 120 to output third driving torque M3. The third driving torque M3 is torque required for maintaining the vehicle speed of the vehicle 10 at V3.

In the foregoing embodiment, after the accelerator pedal position decreases to zero, the controller 400 controls the vehicle 10 to maintain cruise control at the vehicle speed V3. Based on this, the driver only needs to reduce the vehicle speed of the vehicle 10 by releasing the accelerator pedal during traveling of the vehicle, and the vehicle 10 may still perform cruise control after the speed is reduced, thereby reducing operation difficulty of the driver. In addition, the cruise control of the vehicle 10 can reduce energy consumption, thereby increasing a traveling mileage of the vehicle 10.

In an embodiment, when the brake pedal position is greater than a first preset brake pedal position β1 at a ninth moment t₉ after the eighth moment t₈, the controller controls the braking torque output by the electro-mechanical braking apparatus 210 to be zero, and controls the driving torque output by the drive motor 120 to start to decrease.

When the vehicle 10 travels in a congested road section or follows a vehicle at a near distance, to ensure driving safety, after the vehicle 10 performs parking start, the driver may step on a brake pedal to control the vehicle 10 to decelerate. However, increasing the output braking torque of the electro-mechanical braking apparatus 210 by the controller 400 may cause a waste of kinetic energy and increase wear of a brake disc.

In this embodiment of this application, still as shown in FIG. 10, after the brake pedal position is greater than the first preset brake pedal position β1 at the ninth moment t₉ after the eighth moment t₈, the braking torque output by the electro-mechanical braking apparatus 210 is zero, and the controller 400 controls the drive motor 120 to switch from a driving state to a power generation state. In this case, as a wheel rotates, the drive motor 120 generates torque opposite to a rotational direction of the wheel, so that the driving torque output by the drive motor 120 gradually decreases to negative torque, and kinetic energy of the vehicle 10 is recycled by regenerative braking. In addition, the braking torque output by the electro-mechanical braking apparatus 210 is zero, which does not cause loss to the brake disc, thereby prolonging a service life of the brake disc.

In an embodiment, when the brake pedal position starts to decrease at a tenth moment t₁₀ after the ninth moment t₉, the controller 400 controls the braking torque output by the electro-mechanical braking apparatus 210 to be zero, and controls the driving torque output by the drive motor 120 to increase from the negative torque.

In this embodiment of this application, the brake pedal position starts to decrease at the tenth moment t₁₀ after the ninth moment t₉, indicating that the driver is releasing the brake pedal. In this case, the drive motor 120 switches from the power generation state to the driving state, the controller 400 controls driving torque of the drive motor 120 to gradually increase from the negative torque, and the vehicle speed of the vehicle 10 slowly decreases. When the vehicle speed of the vehicle 10 decreases to a vehicle speed V4, the controller 400 controls the drive motor 120 to output driving torque M4, to ensure that the vehicle 10 can perform cruise control at the vehicle speed V4, thereby reducing energy consumption and operation difficulty of the driver.

Further, when the accelerator pedal position is greater than or equal to a second preset accelerator pedal position α2 at a fourth moment t₄ after the tenth moment t₁₀, the controller 400 may continue to control the driving torque output by the drive motor 120 to respond to the accelerator pedal position. Details are not described in this embodiment of this application.

In conclusion, embodiments of this application provide the comfort start control method for a vehicle in park, the controller, and the vehicle. According to the foregoing control method, in a parking start process of a vehicle, after an accelerator pedal position is greater than a first preset accelerator pedal position, braking torque output by an electro-mechanical braking apparatus 210 can be actively reduced, and when the braking torque is reduced to a preset braking torque value, a drive motor 120 can be actively controlled to output driving torque. This prevents the vehicle from lurching forward during parking start, and alleviates a sense of jerk during switching between the driving torque and the braking torque, thereby improving comfort in the parking start process of the vehicle, and enhancing user experience.

In embodiments provided in this application, functional modules may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A comfort start control method for a vehicle in park, wherein the control method is used to control, in a parking start process of the vehicle, braking torque output by a wheel-end braking apparatus of the vehicle and driving torque output by a drive motor of the vehicle, and the control method comprises:
at a first moment when an accelerator pedal position of the vehicle is greater than or equal to a first preset accelerator pedal position, controlling the wheel-end braking apparatus to reduce the output braking torque; and
at a second moment after the first moment, when the braking torque output by the wheel-end braking apparatus is less than or equal to a first preset braking torque value, controlling the drive motor to output the driving torque.

2. The control method according to claim 1, wherein the control method further comprises:
at a third moment after the second moment, when a vehicle speed of the vehicle reaches a first preset vehicle speed, controlling the drive motor to output first driving torque, wherein the first driving torque is torque required for maintaining the vehicle speed of the vehicle at the first preset vehicle speed; and
at a fourth moment after the third moment, when the accelerator pedal position is greater than or equal to a second preset accelerator pedal position, controlling the driving torque output by the drive motor to respond to the accelerator pedal position.

3. The control method according to claim 2, wherein the control method further comprises:
at any moment between the third moment and the fourth moment, when a brake pedal position increase rate of the vehicle is greater than a first preset brake pedal position increase rate, controlling the driving torque output by the drive motor to be zero, and controlling the wheel-end braking apparatus to respond to a brake pedal position of the vehicle.

4. The control method according to claim 2, wherein the control method further comprises:
at any moment between the third moment and the fourth moment, when a brake pedal position increase rate of the vehicle is less than or equal to a first preset brake pedal position increase rate at any moment between the third moment and the fourth moment, controlling the vehicle speed of the vehicle to be inversely proportional to a brake pedal position.

5. The control method according to any one of claims 2 to 4, wherein the control method further comprises:
at the third moment, controlling the braking torque output by the wheel-end braking apparatus to be reduced to zero.

6. The control method according to any one of claims 1 to 5, wherein the control method further comprises:
when the vehicle is in an uphill parking start working condition, after the first moment, controlling a braking torque decrease gradient of the wheel-end braking apparatus to be inversely proportional to a slope angle.

7. The control method according to any one of claims 1 to 6, wherein the control method further comprises:
after the first moment, controlling a braking torque decrease rate of the wheel-end braking apparatus to be directly proportional to a road adhesion coefficient.

8. The control method according to any one of claims 1 to 7, wherein the control method further comprises:
when the vehicle is in a downhill parking start working condition, at the second moment, controlling the driving torque output by the drive motor to be negative torque.

9. The control method according to any one of claims 2 to 7, wherein the control method further comprises:
at any moment between the third moment and the fourth moment, controlling the vehicle speed of the vehicle to be directly proportional to the accelerator pedal position.

10. The control method according to any one of claims 2 to 7, wherein the control method further comprises:
before the fourth moment, controlling the driving torque output by the drive motor not to respond to the accelerator pedal position.

11. The control method according to any one of claims 2 to 7, wherein the control method further comprises:
at any moment between the third moment and the fourth moment, controlling the vehicle speed of the vehicle to be equal to the first preset vehicle speed.

12. The control method according to any one of claims 1 to 11, wherein the control method further comprises:
at a seventh moment before the first moment, when the accelerator pedal position reaches the first preset accelerator pedal position, controlling the first preset accelerator pedal position to remain unchanged from the seventh moment to the first moment.

13. The control method according to any one of claims 2 to 12, wherein the control method further comprises:
at an eighth moment after the third moment, the accelerator pedal position decreases to zero, and at a ninth moment after the eighth moment, when the brake pedal position is greater than the first preset brake pedal position, controlling the braking torque output by the wheel-end braking apparatus to be zero, and controlling the driving torque output by the drive motor to start to decrease; and
at a tenth moment after the ninth moment, when the brake pedal position starts to decrease, controlling the braking torque output by the wheel-end braking apparatus to be zero, and controlling the driving torque output by the drive motor to increase from the negative torque.

14. A controller, wherein the controller controls a vehicle in a parking start process of the vehicle, to implement the control method according to any one of claims 1 to 13.

15. A vehicle, wherein the vehicle uses the control method according to any one of claims 1 to 13 to perform comfort start in park.
